# EUROPEAN PATENT SPECIFICATION

(11) **EP 2 821 378 B1**
(45) Date of publication and mention of the grant of the patent: **17.08.2016**
(21) Application number: 14171875.9
(22) Date of filing: 11.06.2014
(51) Int. Cl.: C03B 37/018

(54) **PRECURSOR FOR A PRIMARY PREFORM FOR OPTICAL FIBRES AND A METHOD FOR MANUFACTURING IT BY MEANS OF A PLASMA DEPOSITION PROCESS**
VORLÄUFER EINER PRIMÄREN VORFORM FÜR OPTISCHE FASERN UND VERFAHREN ZU SEINER HERSTELLUNG MITTELS EINES VERFAHRENS ZUR PLASMAABSCHEIDUNG
PRÉCURSEUR D'UNE PRÉFORME PRIMAIRE DE FIBRES OPTIQUES ET PROCÉDÉ POUR SA FABRICATION AU MOYEN D'UN PROCESSUS DE DÉPÔT PAR PLASMA

(30) Priority: 01.07.2013 NL 2011077
(43) Date of publication of application: 07.01.2015
(73) Proprietor: Draka Comteq B.V., 1083 HJ Amsterdam (NL)
(72) Inventor: Milicevic, Igor, 1083 HJ Amsterdam (NL); van Stralen, Mattheus Jacobus Nicolaas, 1083 HJ Amsterdam (NL); Hartsuiker, Johannes Antoon, 1083 HJ Amsterdam (NL); Krabshuis, Gertjan, 1083 HJ Amsterdam (NL)
(74) Representative: Algemeen Octrooi- en Merkenbureau B.V.

(56) References cited:
- EP-A1- 0 165 510
- EP-A1- 1 988 064
- EP-A1- 2 008 978
- EP-A2- 2 573 056
- WO-A1-99/35304
- US-A- 4 262 035
- US-A- 4 292 063
- US-A1- 2007 003 197
- US-A1- 2007 169 698
- US-A1- 2008 063 812

## Description

The present invention relates to a method for manufacturing a precursor for a primary preform for optical fibres by means of an internal plasma deposition process, such as a plasma chemical vapour deposition (PCVD) process. The present invention moreover relates to a method for manufacturing a primary preform for optical fibres by means of an internal plasma deposition process.

The present invention relates to the field of optical fibres. More specifically, it relates to the field of manufacturing optical fibres by means of chemical vapour deposition. There are several types of chemical vapour deposition (CVD) known, such at outside vapour deposition (OVD), vapour axial deposition (VAD), modified chemical vapour deposition (MDVD) and plasma-enhanced chemical vapour deposition (PECVD or PCVD). Plasma-enhanced chemical vapour deposition (PECVD or PCVD) is a process used to deposit thin films from a gas state (vapour) to a solid state on a substrate. Chemical reactions are involved in the process, which occur after creation of a plasma of the reacting gases.

Generally, in the field of optical fibres, multiple thin films of glass are deposited on the inside surface of a substrate tube. The substrate tube is hollow to allow internal deposition. The substrate tube may be of glass, preferably glass quartz (SiO₂). Glass-forming gases (viz. reactive gases comprising gasses for the forming of glass and optionally precursors to dopants) are introduced into the interior of the substrate tube from one end (called the "supply side" of the substrate tube). Doped or undoped glass layers (depending on the use of reactive gases with or without one or more precursors to dopants, respectively) are deposited onto the interior surface of the substrate tube. The remaining gases are discharged or removed from the other end of the substrate tube; this is called the "discharge side" of the substrate tube. The removal is optionally carried out by means of a vacuum pump. The vacuum pump has the effect of generating a reduced pressure in the interior of the substrate tube, which reduced pressure generally comprises a pressure value ranging between 5 and 50 mbar.

Generally, the plasma is induced by the use of electromagnetic radiation, e.g. microwaves. Generally, electromagnetic radiation from a generator is directed towards an applicator via a waveguide, which applicator surrounds the substrate tube. The applicator couples the electromagnetic energy into a plasma that is generated inside the substrate tube. The applicator is moved reciprocally in the longitudinal direction of the substrate tube. Thus, the plasma formed, also called the "plasma reaction zone", is also moved reciprocally. As a result of this movement a thin vitrified silica layer is deposited onto the interior of the substrate tube with every stroke or pass.

The applicator and the substrate tube are generally surrounded by a furnace so as to maintain the substrate tube at a temperature of 900-1300 °C during the deposition process.

Thus, the applicator is moved in translation over the length of the substrate tube within the boundaries of a furnace which surrounds the substrate tube and the applicator reciprocating within the furnace. With this translational movement of the applicator the plasma also moves in the same direction. As the applicator reaches the inner wall of the furnace near one end of the substrate tube, the movement of the applicator is reversed so that it moves to the other end of the substrate tube towards the other inner wall of the furnace. In other words the applicator and thus the plasma is reciprocating between a reversal point at the supply side and a reversal point at the discharge side of the substrate tube. The applicator and thus the plasma travels a back and forth movement along the length of the substrate tube. Each back and forth movement is call a "'pass" or "stroke". With each pass a thin layer of non-vitrified or vitrified silica material is deposited on the inside of the substrate tube.

This plasma causes the reaction of the glass-forming gases (e.g. O₂, SiCl₄ and e.g. a precursor for a dopant, such as GeCl₄ or other gases) that are supplied to the inside of the substrate tube. The reaction of the glass-forming gases allows reaction of Si (Silicon), O (Oxygen) and e.g. the dopant Ge (Germanium) so as to thus effect direct deposition of, for example, Ge-doped SiOx on the inner surface of the substrate tube.

Normally, a plasma is generated only in a part of the substrate tube, viz. the part that is surrounded by the applicator. The dimensions of the applicator are smaller than the dimensions of the furnace and of the substrate tube. Only at the position of the plasma, the reactive gasses are converted into solid glass and deposited on the inside surface of the substrate tube. Since the plasma reaction zone moves along the length of the substrate tube, glass is deposited more or less evenly along the length of the substrate tube.

When the number of passes increases, the cumulative thickness of these thin films, i.e. of the deposited material, increases; thus leading to a decrease in the remaining internal diameter of the substrate tube. In other words, the hollow space inside the substrate tube keeps getting smaller with each pass.

After the vitrified silica layers have been deposited onto the interior of the substrate tube, the substrate tube is subsequently contracted by heating into a solid rod ("collapsing"). The remaining solid rod is called a primary preform. In a special embodiment, the solid rod or primary preform may furthermore be externally provided with an additional amount of glass, for example, by means of an external vapour deposition process or direct glass overcladding (so-called "overcladding") or by using one or more preformed glass tubes (so-called "sleeving"), thus obtaining a composite preform called the final preform. From the final preform thus produced one end of which is heated, optical fibres are obtained by drawing on a drawing tower. The refractive index profile of the consolidated (final) preform corresponds to the refractive index profile of the optical fibre drawn from such a preform.

One way of manufacturing an optical preform by means of a PCVD process is known from US patent No. 4,314,833. According to the process that is known from that document, one or more doped or undoped glass layers are deposited onto the interior of a substrate tube, using a low-pressure plasma in the substrate tube.

According to International application WO 99/35304 microwaves from a microwave generator are directed towards an applicator via a waveguide, which applicator surrounds a substrate tube. The applicator couples the electromagnetic energy into the plasma. WO 99/35304 discloses a method of manufacturing an optical fibre preform rod, comprising the steps of: using Plasma Chemical Vapor Deposition to deposit layers of doped silica on the inside surface of a cylindrical vitreous substrate tube; and thermally collapsing the substrate tube so as to form a preform rod, whereby the substrate tube is located along the cylindrical axis within the inner wall of the resonant cavity of the apparatus, wherein the tube and the cavity are substantially coaxial, and the resonant cavity is caused to move back and forth along the length of the substrate tube. According to the present invention the step of thermally collapsing in not present in the step of preparing a precursor to a preform. It may optionally be present in a method of preparing a primary preform. According to the present invention there are two steps of depositing layers using two different reaction zones.

The inventors have observed that these prior art plasma deposition processes lead to the deposition of irregular glassified material occurring in an area upstream of a reversal point at the supply side of the substrate tube and in an area downstream of a reversal point at the discharge side of the substrate tube (manifested as an opaque ring on the inner surface of the hollow substrate tube called "soot ring"). Thus these soot rings are observed outside of the area which is to be used for drawing optical fibres. At the discharge side of the primary preform an area is observed having a higher doped silica which is prone to cracking. This is disclosed in more detail in the Dutch patent application 2010724 of the present inventors. Without wishing to be bound to any particular theory, it is assumed that such soot ring deposition takes place as a result of the relatively low intensity of the plasma in the region where the soot deposition takes place. It is further assumed that the temperature on the inner surface of the hollow substrate tube at the reversal points plays an important part in the formation of such a soot ring. A major drawback of the soot ring deposition is that there is a significant risk of fracture of glass layers, which means a loss of the total preform rod, which is undesirable.

Layer cracking is attributed to the fact that a high stress level will cause fracture at the location of any irregularities in the glass, which irregularities occur in particular in soot rings.

Since the current commercial trend in manufacturing of optical fibre preforms tends to go towards larger (thicker preforms) more passes or strokes will be required. This leads to tubes after deposition (before collapsing) having an even smaller internal diameter and even thicker soot ring. The problem of cracking is becoming more and more pressing.

This problem has been recognized previously and in the prior art several solutions have been proposed. Some of these solutions as discussed below.

A solution that is commonly known in the field is the following. When during the collapsing treatment cracking is observed in the region of the soot ring, the temperature of the plasma deposition furnace for subsequent depositions is increased at either the supply side or the discharge side or both (depending on where the cracking occurs). This increase in temperature can only partly solve the problem. There are limits to the amount of temperature increase and the temperature difference between the middle part of the plasma deposition furnace and one or both ends (supply and/or discharge side).

Another solution is proposed in EP 1 988 064 by the present inventors. This document relates to the axial variation of the reversal point(s) during different phases (passes) of the glass deposition. In other words, the deposition of the soot ring is spread out over a larger area and hence the chance of cracking is reduced. For each phase of the deposition process (e.g. for the deposition of the core and for the deposition of the cladding) the reversal points at the supply side is moved thereby providing a different placement of the soot ring. This method is very useful but could lead to a number of adjacent soot rings which might decrease the effective length of the preform.

Yet another solution is proposed in EP 1 801 081 by the present inventors. The solution of this patent is the use of a so-called insertion tube, being a tube that is inserted at the supply side of the substrate tube inside of the hollow substrate tube. The effect is that the material forming the soot ring is partly deposited inside of said insertion tube and can easily be removed by the removal of said insertion tube. This method is very useful but in some cases might lead to so-called deposition oscillation which is undesirable.

Yet another solutions is proposed in EP 2 008 978 by the present inventors. This method applies an etching step between two separate phases during which etching step any non-uniformities are removed from the substrate tube. The etching is carried out by an etching gas. This method is very useful in a large number of applications. However, for the mere removal of a soot ring this method is labour intensive and costly.

US 2009/0126407 A1 by Corning Inc. discloses a method of making an optical fiber preform which includes depositing silica glass on the inside of a tube substrate via a plasma chemical vapour deposition (PCVD) operation. The parameters of the PCVD operation are controlled such that the silica glass deposited on the interior of the tube substrate contains a non-periodic array of voids in a cladding region of the optical fiber preform. The optical fiber preform may be used to produce an optical fiber having a core and a void containing cladding. The core of the optical fiber has a first index of refraction and the cladding has a second index of refraction less than that of the core.

Therefore, there is a need for an alternative solution to the problem above.

It is an object of the present invention to provide a method for manufacturing a preform for optical fibres, in which the occurrence of undesirable fracture of glass layers is minimised.

It is another object of the present invention to provide a method of manufacturing a preform for optical fibres by which a preform having a maximum effective preform length for drawing optical fibres therefrom is obtained.

It is another object of the present invention to provide a method of manufacturing a preform for optical fibres by which a preform having a maximum thickness for drawing optical fibres therefrom is obtained with less change of cracking.

One or more of these objects are achieved by the present invention.

### Summary of the invention

The present invention relates, in a first aspect, to a method for manufacturing a precursor for a primary preform for optical fibres by means of an internal plasma deposition process, which method comprises the steps of:
i)providing a hollow substrate tube having a supply side and discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point the discharge side to provide a substrate tube having non-vitrified layers on at least a part of its inner surface; and subsequently
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers
iv) cooling the substrate tube having deposited non-vitrified and vitrified silica layers obtained in step iii) to obtain said precursor for a primary preform.

In a second aspect, the present invention relates to a method for manufacturing a primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point the discharge side to provide a substrate tube having non-vitrified layers on at least a part of its inner surface; and subsequently
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers
iv) cooling the substrate tube having deposited non-vitrified and vitrified silica layers obtained in step iii) to obtain a precursor for a primary preform;
v) subjecting the precursor for a primary preform obtained in step iv) to a collapsing treatment to obtain a primary preform.

In other words, said second aspect of the present invention relates to a method for manufacturing a primary preform for optical fibres by means of an internal plasma deposition process whereby the precursor for a primary preform obtained in step iv) of the first aspect of the present invention is subjected to a collapsing treatment. This will thus lead to a solid primary preform. During the step of collapsing the non-vitrified layers are vitrified.

Embodiments of these two aspects are disclosed below. It should be noted that the embodiments are applicable, if possible, to each of these aspects.

In an embodiment, the electromagnetic radiation used are microwaves.

In a first facet of these two aspects the non-vitrified layers deposited in step ii) are deposited only on a part of the inner surface of said substrate tube. At least a part of the inner surface at or near a reversal point at the discharge side is provided with non-vitrified layers. It is also possible that a part of the inner surface at or near a reversal point at the supply side is provided with non-vitrified layers.

In a second facet of said two aspects said non-vitrified layers deposited in step ii) are deposited on substantially the complete inner surface of said substrate tube. Thus the non-vitrified layers may be supplied on a large part of the inner surface of the substrate tube. Such as between the reversal point near the supply side and the reversal point near the discharge side.

In an embodiment of the first and second aspects and the first and seconds facets, part of said deposited non-vitrified layers is etched away.

In an embodiment, the method according to the invention, further comprises a step A) carried out after step ii) and prior to step iii), said step A) comprising etching away said non-vitrified silica layers deposited in step ii) on at least part of said inner surface of said substrate tube.

In other words, step A) comprises etching away at least part of said non-vitrified silica layers deposited in step ii). The present invention relates to a method for manufacturing a (precursor for) primary preform for optical fibres by means of an internal plasma deposition process further comprising the step of etching away the non-vitrified silica layers obtained in step ii) prior to carrying out step iii).

The present invention therefore relates to a method for manufacturing a precursor for primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point at the discharge side to provide a substrate tube having non-vitrified layers on at least a part of its inner surface; and subsequently
   A) etching away said non-vitrified silica layers deposited in step ii) on at least part of said inner surface of said substrate tube;
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers;
iv) cooling the substrate tube having deposited non-vitrified and vitrified silica layers obtained in step iii) to obtain a precursor for a primary preform;

The present invention relates to a method for manufacturing a primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point at the discharge side to provide a substrate tube having non-vitrified layers on at least a part of its inner surface; and subsequently
   A) etching away said non-vitrified silica layers deposited in step ii) on at least part of said inner surface of said substrate tube;
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers
iv) cooling the substrate tube having deposited non-vitrified and vitrified silica layers obtained in step iii) to obtain a precursor for a primary preform;
v) subjecting the precursor for a primary preform obtained in step iv) to a collapsing treatment to obtain a primary preform.

In another embodiment of the first and second aspects, said method further comprises a step B) carried out after step ii) and prior to step iii), said step B) comprising of vitrifying said non-vitrified silica layers deposited in step ii) on at least part of said inner surface of said substrate tube.

In other words, step B) comprises vitrifying at least part of said non-vitrified silica layers deposited in step ii). The present invention relates to a method for manufacturing a (precursor for) primary preform for optical fibres by means of an internal plasma deposition process further comprising the step of vitrifying the non-vitrified silica layers obtained in step ii) prior to carrying out step iii).

The invention therefore relates to a method for manufacturing a precursor for a primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point at the discharge side to provide a substrate tube having non-vitrified layers on at least a part of its inner surface; and subsequently
   step B) vitrifying said non-vitrified silica layers deposited in step ii) on at least part of said inner surface of said substrate tube, subsequently
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers
iv) cooling the substrate tube having deposited non-vitrified and vitrified silica layers obtained in step iii) to obtain said precursor for a primary preform.

The present invention relates to a method for manufacturing a primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point at the discharge side to provide a substrate tube having non-vitrified layers on at least a part of its inner surface; and subsequently
   step B) vitrifying said non-vitrified silica layers deposited in step ii) on at least part of said inner surface of said substrate tube, subsequently
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers
iv) cooling the substrate tube having deposited non-vitrified and vitrified silica layers obtained in step iii) to obtain a precursor for a primary preform;
v) subjecting the precursor for a primary preform obtained in step iv) to a collapsing treatment to obtain a primary preform.

According to these two embodiments, non-vitrified silica layers are either etched away from at least part of said inner surface of said substrate tube or are vitrified on said at least part of said inner surface of said substrate tube. The result of both of these embodiments is that no non-vitrified silica layers are present after this step has been carried out on a part of said inner surface of said substrate tube.

The part no longer containing non-vitrified silica layers is the part between a longitudinal position 200 mm upstream of a reversal point near the discharge side and a longitudinal position 200 mm downstream of a reversal point near the supply side. Preferably, wherein said at least part of said inner surface of said substrate tube is the part between a longitudinal position 100 mm upstream of a reversal point near the discharge side and a longitudinal position 100 mm downstream of a reversal point near the supply side. More preferably, said at least part of said inner surface of said substrate tube is the part between a longitudinal position 50 mm upstream of a reversal point near the discharge side and a longitudinal position 50 mm downstream of a reversal point near the supply side.

In other words, the non-vitrified silica layers are not etched away or not vitrified and hence maintained on at least part of said inner surface of said substrate tube, being the part between a reversal point near the discharge side and a longitudinal position 200 mm upstream of said reversal point, preferably between said reversal point near the discharge side and a longitudinal position 100 mm upstream of said reversal point, more preferably between the reversal point near the discharge side and a longitudinal position 50 mm upstream of said reversal point.

In other words, the non-vitrified silica layers are not etched away or not vitrified and hence maintained on at least part of said inner surface of said substrate tube, being the part between a reversal point near the supply side and a longitudinal position 200 mm downstream of said reversal point, preferably between said reversal point near the supply side and a longitudinal position 100 mm downstream of said reversal point, more preferably between the reversal point near the supply side and a longitudinal position 50 mm downstream of said reversal point.

Hereafter different embodiments of the present invention are disclosed. These embodiments are, unless stated otherwise, applicable to all aspects and facets of the present invention.

In an embodiment the first reaction conditions comprise a pressure of higher than 30 millibar, preferably higher than 60 mbar.

In another embodiment, the first reaction conditions comprise a pressure of higher than 30 millibar, preferably higher than 40 millibar, more preferably higher than 50 millibar, even more preferably higher than 60 millibar.

In another embodiment, the first reaction conditions comprise a pressure of lower than 1000 millibar, preferably lower than 800 millibar, more preferably lower than 600 millibar, even more preferably lower than 400 millibar, or even lower than 200 millibar.

In another embodiment, the second reaction conditions comprise a pressure of between 1 and 25 millibar, preferably between 5 and 20 millibar, more preferably between 10 and 15 millibar.

In another embodiment, the first reaction conditions comprise a pressure of lower than 1000 millibar, preferably lower than 200 millibar.

In another embodiment, the second reaction conditions comprise a pressure of between 1 and 25 millibar, preferably between 10 and 15 millibar.

In another embodiment, in step ii) between 1 and 200 non-vitrified silica layers are deposited.

In another embodiment, the non-vitrified silica layers each, independently, have a thickness between 1 and 5 micrometer, preferably between 2 and 3 micrometer.

In another embodiment, the non-vitrified silica layers each have approximately the same thickness (viz. each layer has the same thickness with a margin of ± 5 % between the separate layers).

In another embodiment, the non-vitrified silica layers each have approximately the same volume (viz. each layer has the same volume with a margin of ± 5 % between the separate layers). When the inner space of the substrate tube decreases with increasing number of deposited layers, the thickness of the layers may increase when the volume stays the same (decreased diameter leads to a decreased inner surface).

In another embodiment, the non-vitrified silica layers that are deposited in total have a thickness between 1 and 400 micrometer.

The invention also relates to a precursor for a primary preform for optical fibres provided with deposited non-vitrified and vitrified silica layers on its inner surface to be used for the manufacturing of a primary preform for optical fibres wherein the deposited non-vitrified silica layers are present on at least part of the inner surface of said substrate tube at or near the discharge side.

The present invention will be discussed in more detail below.

### Definitions as used in the present description

The following definitions are used in the present description and claims to define the stated subject matter. Other terms not cited below are meant to have the generally accepted meaning in the field.
"hollow substrate tube" as used in the present description means:.a, preferably elongated, tube having a cavity within. Generally, the inside of said tube is provided (or coated) with a plurality of glass layers during the manufacturing of a preform.
"precursor for a primary preform" as used in the present description means: an intermediate product that will lead to a primary preform after one or more additional process steps.
"primary preform" as used in the present description means: a solid rod (solid preform) that requires to be externally provided with extra glass before it becomes a final preform.
"final preform" as used in the present description means: a solid rod (solid composite preform) that an be directly used for drawing of optical fibers therefrom.
"cavity" as used in the present description means: the space surrounded by the wall of the substrate tube.
"gas supply side" or "supply side" as used in the present description means: one side of the substrate tube, being an open end of the substrate tube that is used as inlet for the gases. The supply side is the side opposite to the discharge side.
"gas discharge side" or "discharge side" as used in the present description means: one side of the substrate tube, being an open end of the substrate tube that is used as outlet for the gases. The discharge side is the side opposite to the supply side.
"inner surface" as used in the present description means: the inside surface or interior surface of the hollow substrate tube.
"glass" or "glass material" as used in the present description means: crystalline or vitreous (glassy) oxide material - e.g. silica (SiO₂) or even quartz - deposited by means of a vapour deposition process.
"silica" as used in the present description means: any substance in the form of SiOx, whether or not stoichiometric, and whether or not crystalline or amorphous.
"glass-forming gases" as used in the present description means: reactive gases used during the deposition process to form glass layers. These glass forming gases may comprise a precursor for a dopant. (e.g. O₂ and SiCl₄ and optionally others).
"precursor for a dopant" as used in the present description means: a compound or composition that, when introduced into glass, become a dopant having an effect on the refractive index of the glass. Precursors for dopants may for example be gasses that react with one or more compounds in the glass-forming gasses to form doped glass layers when vitrified. During the glass deposition the precursor for a dopant is introduced into the glass layers.
"dopant" as used in the present description means: a compound or composition that is present in the glass of the optical fibre and that has an effect on the refractive index of said glass. It can for example be an down dopant, viz. a dopant decreasing the refractive index, such as Fluorine or Boron (e.g. introduced as a precursor in the form of F₂, C₂F₈ SF₆, C₄F₈ or BCl₃). It can for example be a up-dopant, viz. a dopant increasing the refractive index, such as Germanium (e.g. introduced as a precursor in the form of GeCl₂ (germanium dichloride) or GeCl₄ (germanium tetrachloride)). Dopants can be present in the glass either in the interstices of the glass (e.g. in the case of F) or they may be present as an oxide (e.g. in the case of Germanium, Aluminium, Phosphorus or Boron).
"non-vitrified silica" is the same as "soot" as used in the present description and means: incompletely vitrified (= not or partly vitrified) silica. It can be either undoped or doped.
"vitrified silica" is the same as "glass" as used in the present description and means: a glassy substance produced by the complete vitrification of glass-forming compounds. It can be either undoped or doped.
"soot deposition" as used in the present description means: the deposition of non-vitrified silica on the inner walls of the substrate tube. Soot deposition is visible for the eye as a white opaque fine particulate material.
"soot ring" as used in the present description means: irregular glassified material manifested as an opaque ring on the inner surface of the hollow substrate tube. It should be noted that a soot ring is not constituted of fine particulate non-vitrified silica. A soot ring is hence not constituted of soot deposition as defined above.
"reaction zone" as used in the present description means: the zone or axial location wherein the glass-forming reaction or deposition takes place. This zone is formed by a plasma and preferably moves reciprocally along the longitudinal length of the substrate tube.
"reaction conditions" as used in the present invention means: a set of conditions such as temperature, pressure, electromagnetic radiation that are used to effect the deposition of the silica layers (either non-vitrified or vitrified).
"plasma" as used in the present description means: an ionized gas consisting of positive ions and free electrons in proportions resulting in more or less no overall electric charge at very high temperatures. The plasma is induced by electromagnetic radiation, preferably by microwaves.
"reversal point" as used in the present description means: the axial point or position on the substrate tube at which the movement of the applicator reciprocates. In other words, changes from back to forth and forth to back. It is the turning point of the applicator. The axial point is measured at the middle (longitudinal) of the applicator.
"near the reversal point" as used in the present description means: an axial position on the substrate tube that is close in distance to the reversal point. or is the same position as the reversal point.
"at the reversal point" as used in the present description means: an axial position on the substrate tube that is the same position as the reversal point.
"moved back and forth" as used in the present description means: a reciprocating movement or moving backwards and forwards in a straight line.
"phase" as used in the present description means: a part of the deposition process in which glass layers having a specific refractive index value are deposited. The specific value may the constant or exhibit a gradient. For example, for a simple step index fibre the deposition of the core and the deposition of the cladding are each considered a separate phase.
"stroke" or "pass" as used in the present description means: each back and forth movement of the applicator along the length of the substrate tube.
"upstream" as used in the present description means: in the direction of the supply side.
"downstream" as used in the present description means: in the direction of the discharge side.

### Detailed description of the invention

The present invention relates, in a first aspect, to a method for manufacturing a precursor for a primary preform for optical fibres by means of an internal plasma deposition process. In a preferred embodiment of this and all other aspects of the invention, said internal plasma deposition method is a plasma chemical vapour deposition (PCVD) process.

The method comprises the following steps:
In a first step, providing a hollow glass substrate tube having a supply side and a discharge side. This hollow glass substrate tube is used for the internal deposition of glass layers on the inner surface thereof. A main gas line and at least one secondary gas line are attached to said supply side and preferably a vacuum pomp is attached to said discharge side.

In a second step, a first plasma reaction zone is created having first reaction conditions for effecting the deposition of non-vitrified silica layers on at least part of the inner surface of said substrate tube at or near a reversal point at the discharge side.

Subsequently, in a third step of the inventive method, a second plasma reaction zone having second reaction conditions for effecting the deposition of vitrified silica layers on the inner surface of said non-vitrified silica layers deposited in the second step to obtain a substrate tube having deposited non-vitrified and vitrified silica layers.

In a fourth step the substrate tube having deposited non-vitrified and vitrified silica layers obtained in the third step is cooled. The precursor for a primary preform is taken out of the plasma deposition lathe, or left mounted in the plasma deposition lathe, to cool down in surrounding air (no forced cooling is applied).

The solution that the present inventors have found to the problems cited above in the prior art is the deposition of non-vitrified silica at or near one reversal point prior to the deposition of vitrified silica. The surprising effect reached by the solution of the present invention is that on cooling layer cracking is reduced.

The layer cracking is reduced because the tension between the doped layers and the substrate tube is reduced due to the layer of non-vitrified silica present between the doped layer and the substrate tube.

The layer crack problem occurs particularly at the pump side of the deposition tube due to the position in the furnace (the edge of the furnace). Furthermore, once the tube is removed from the plasma deposition process and passively cooled the different coefficients of expansion of the doped layers and the substrate tube causes tension to occurs between the layers. This tension can lead to a very quick breakage of the layers and often the substrate tube.

The reduction is tension between the layers is facilitated by the presence of a layer of soot (non-vitrified glass) between the inner surface of said substrate tube and the deposited glass layers. This silica soot has a certain (albeit limited) adherence to the glass layers to be deposited and has a certain (albeit limited) adherence to the substrate tube. It thus acts as a barrier between two vitrified parts, firstly the substrate, which is preferably a glass or silica-based substrate tube, and on the other hand the glass layers that are deposited. This barrier layer will act as a non-stick layer or buffer layer which prevents cracks originating in a soot ring from propagating inside the deposited vitrified layers.

The present method comprises the following steps, which are not all essential in all of the embodiments. It is possible that some of these steps are carried out in a different order.

The first step is providing a hollow glass tube. Said hollow substrate tube may preferably have a supply side and a discharge side. This hollow substrate tube is used for the internal deposition of layers on the inner surface thereof. A gas line (or optionally a main gas line and at least one secondary gas lines) is attached to said supply side and preferably a vacuum pomp is attached to said discharge side.

In another step, a gas flow is supplied into the interior of said hollow substrate tube. This gas flow is preferably introduced via the supply side of said substrate tube. Said gas flow comprises at least one glass-forming gas. For example, oxygen and silicon tetrachloride. Optionally, said gas flow also comprises, during at least a part of the deposition process, at least one precursor for a dopant, such as germanium (e.g. in the form of germanium tetra- or dichloride) and/or fluorine (e.g. in the form of C₂F₆). Firstly only oxygen is introduced, later optionally an etching gas, even later the glass forming gasses.

In a following step, a plasma reaction zone is created in the interior of said hollow substrate tube. The plasma reaction zone does not span the full length of the substrate tube but only a part surrounded by the applicator. In other words the plasma reaction zone is created in a part of the interior of the hollow substrate tube. The plasma is created by means of electromagnetic radiation. This plasma reaction zone provides the conditions that are suitable for effecting the deposition of non-vitrified glass layers or non-vitrified glass layers - depending on the conditions- on the inner surface of said hollow substrate tube by allowing the reaction of the glass-forming gases and optionally one or more precursors for dopants. In other words, the plasma reaction zone is the three dimensional space that is taken up by the plasma inside of the substrate tube.

The reaction zone is preferably reciprocated between the two reversal points, each of which is located at or near the ends of the substrate tube. There is one reversal point near the supply side and there is one reversal point near the discharge side. The applicator is present coaxially over the substrate tube. The plasma formed moves back and forth along the longitudinal axis of said hollow substrate tube together with the applicator. The movement reciprocates between a reversal point located near the supply side and a reversal point located near the discharge side of said hollow substrate tube. This reciprocation takes place a number of times (called passes or strokes) and during each pass or stroke a thin layer of vitrified or non-vitrified glass is deposited. In case the deposition process is carried out in several phases, each phase comprises a plurality of strokes, for example between 1000 and 10.000, such as 2000 to 4000 strokes.

During step ii) of the present inventive method, a first plasma reaction zone is provided for the deposition of non-vitrified glass. First reaction conditions are applied. This first reaction conditions are effective for the production of non-vitrified silica layers, in other words these conditions are to prevent vitirifcation. A gas flow of glass-forming gasses is present during this step. In an embodiment a high pressure (e.g. > 50mbar) is used to prevent vitrification. This is a consequence of the fact that the pressure determines the amount of silica formation in the gas phase. When the pressure in the substrate tube is low enough only a small amount of soot (SiO₂ or GeO₂) will be formed in the gas phase. This soot will then stick to the surface of the substrate tube. If the pressure is higher than 50 mbar, there will be a significant amount of soot creation. If one conducts the plasma deposition process in a higher pressure regime (>60 mbar), one finds that the deposition is consisting for a great part of soot material.

During step iii) of the present inventive method, a second plasma reaction zone is provided for the deposition of vitrified silica. Thus, this step entails creating a second plasma reaction zone having second reaction conditions in the interior of said hollow substrate tube having deposited non-vitrified glass layers on its inner surface by means of electromagnetic radiation for effecting the deposition of vitrified silica layers on the non-vitrified silica layers deposited in a previous step. The second reaction conditions as used during this step in order to obtain a plasma reaction zone suitable for the deposition of glass is known in the field.

At the end of this deposition step of the process of the present invention, a substrate tube having the desired number of vitrified silica layers deposited on its inner surface is obtained. At that moment, the deposition process is stopped. Thus, the electromagnetic radiation is stopped as well as the gas flow comprising glass-forming gases.

In a subsequent step the precursor for a primary preform obtained in the previous step is cooled. The cooling takes place in the surrounding air (no forced cooling is applied). The cooling step may be passive, that is no external cooling means are applied in order to facilitate cooling. The cooling may also take place by means of active cooling.

In an optional step of the present invention, the precursor for a primary preform is subjected to a collapsing treatment so as to form a primary preform. It can be envisaged that the finished precursor for a primary preform is transported to another facility where this collapsing step is carried out. During this collapsing step the precursor for a primary preform is heated by using an external heat source such as a furnace or burners to a temperature of between 1800 and 2200 °C. In several strokes or collapsing passes the hollow tube is heated and collapses onto itself to form a solid rod. It should be noted that any non-vitrified layers present in the precursor for a primary preform are also vitrified during this collapsing step due to the temperature.

In an optional step of the present invention, the deposited tube or primary preform obtained may furthermore be externally provided with an additional amount of glass, for example by means of an external vapour deposition process or direct glass deposition process (so-called "overcladding") or by using one or more preformed glass tubes that are provided over the outside surface of the primary preform obtained according to the method of the present invention. This process is called "sleeving". When a solid rod is used as the starting point a composite preform called the final preform is obtained. In the method according to the present invention this step of externally providing extra glass can be carried out by using doped glass. In a preferred embodiment, the overcladding process uses natural or synthetic silica. This can be doped or undoped silica. In an embodiment Fluorine doped silica is used in the overcladding process, e.g. to obtain an optical fiber having a buried outer optical cladding.

From the final preform thus produced, one end of which is heated, optical fibres are obtained by drawing on a drawing tower. The refractive index profile of the consolidated (collapsed) preform corresponds to the refractive index profile of the optical fibre drawn from such a preform.

In an embodiment, the method according to the invention, further comprises a step A) carried out after step ii) and prior to step iii), said step A) comprising etching away said non-vitrified silica layers deposited in step ii) on at least part of said inner surface of said substrate tube.

The advantage of etching away an area of the non-vitrified silica layers is that the non-vitrified layers are no present throughout the entire length of the tube, but only at the positions where layer cracking occurs the most, for example in areas containing a high percentage of dopants.

The step of etching can be conducting using etching gases known to the skilled person for example CF₄, C₂F₄, SF₆, C₂Cl₂F₂, or F₂SO₂F₂.

In an embodiment, the method according to the invention, further comprises a step B) carried out after step ii) and prior to step iii), said step B) of vitrifying said non-vitrified silica layers deposited in step ii) on at least part of said inner surface of said substrate tube. The advantage of this aspect is that in the final primary preform it is not possible to distinguish vitrified and non-vitrified layers thus making the primary preform suitable for a wide range of applications.

### Examples

### Example 1

A silica substrate tube is placed in a PCVD lathe surrounded by a furnace. The furnace is brought to a temperature of 1100 °C while oxygen is flown through the substrate tube at a pressure of 15 millibar. The resonator is reciprocating between a reversal point at the gas supply side and a reversal point at the discharge side at a speed of approx. 20 meters per minute. A plasma is induced and the pressure is increased to 60 millibar. Approximately 20 layers of non-vitrified undoped silica are deposited in a period of 2 minutes. The pressure is subsequently decreased to approximately 14 millibar and approximately 5000 layers of vitrified silica with increasing dopant concentration are deposited.

When the complete process is finished, the tube is left in the PCVD lathe with the furnace lifted so that the furnace is no longer surrounding the substrate tube, to cool down in surrounding air (no forced cooling is applied). When the tube is at room temperature (23 °C) no cracking of the deposited vitrified layers is observed. After cooling the substrate tube with deposited layers on its inner diameter is placed in a collapsing apparatus and collapsed to provide a solid core rod.

### Example 2

A silica substrate tube is placed in a PCVD lathe surrounded by a furnace. The furnace is brought to a temperature of 1100 °C while oxygen is flown through the substrate tube at a pressure of 15 millibar. The resonator is reciprocating between a reversal point at the gas supply side and a reversal point at the discharge side at a speed of approx. 20 meters per minute. A plasma is induced and the pressure is increased to 60 millibar. Approximately 30 layers of non-vitrified undoped silica are deposited in a period of 2 minutes. After depositing the layers of non-vitrified silica, the reversal point at the gas supply side is shifted 40 mm downstream the substrate tube and the reversal point at discharge side is shifted 40 mm upstream the substrate tube. The pressure is subsequently decreased to approximately 14 millibar and a flow of oxygen containing C₂F₆ as etching gas is injected in the substrate tube while the plasma is reciprocating until the non-vitrified silica is etched away in the area between the shifted reversal points.

Thereafter, the reversal points are shifted to the original positions and approximately 5000 layers of vitrified silica are deposited with increasing dopant concentration are deposited.

When the complete process is finished, the tube is left in the PCVD lathe with the furnace lifted so that the furnace is no longer surrounding the substrate tube, to cool down in surrounding air (no forced cooling is applied). When the tube is at room temperature (23 °C) no cracking of the deposited vitrified layers is observed. After cooling the substrate tube with deposited layers on its inner diameter is placed in a collapsing apparatus and collapsed to provide a solid core rod.

### Example 3

A silica substrate tube is placed in a PCVD lathe surrounded by a furnace. The furnace is brought to a temperature of 1100 °C while oxygen is flown through the substrate tube at a pressure of 15 millibar. The resonator is reciprocating between a reversal point at the gas supply side and a reversal point at the discharge side at a speed of approx. 20 meters per minute. A plasma is induced and the pressure is increased to 60 millibar. Approximately 10 layers of non-vitrified undoped silica are deposited in a period of 2 minutes. After depositing the layers of non-vitrified silica, the reversal point at the gas supply side is shifted 40 mm downstream the substrate tube and the reversal point at discharge side is shifted 40 mm upstream the substrate tube. A flow of oxygen is introduced in the substrate side while the plasma is reciprocating until the non-vitrified silica is vitrified in the area between the shifted reversal points.
Therefore, one or more aims of the present invention mentioned above have been reached. More embodiments of the present invention are cited in the appended claims.

## Claims

1. Method for manufacturing a precursor for a primary preform for optical fibres by means of an internal plasma deposition process, which method comprises the steps of:
i) providing a hollow substrate tube having a supply side and a discharge side;
ii) creating a first plasma reaction zone having first reaction conditions in the interior of said hollow substrate tube by means of electromagnetic radiation for effecting the deposition of non-vitrified silica layers on at least part of the inner surface of said substrate tube at or near a reversal point at the discharge side to provide a substrate tube having non-vitrified layers on at least a part of its inner surface; and subsequently;
iii) creating a second plasma reaction zone having second reaction conditions in the interior of said hollow substrate tube by means of electromagnetic radiation for effecting the deposition of vitrified silica layers on said substrate tube having non-vitrified layers on at least a part of its inner surface obtained in step ii) to obtain a substrate tube having deposited non-vitrified and vitrified silica layers;
iv) cooling the substrate tube having deposited non-vitrified and vitrified silica layers obtained in step iii) to obtain said precursor for a primary preform.

2. Method according to claim 1, whereby the method further comprises subjecting the precursor for a primary preform obtained in step iv) to an additional step v), being a collapsing treatment so as to form a primary preform.

3. Method according to claim 1 or claim 2, further comprising a step A) carried out after step ii) and prior to step iii), said step A) comprising etching away said non-vitrified silica layers deposited in step ii) on at least part of said inner surface of said substrate tube.

4. Method according to claim 1 or claim 2, further comprising a step B) carried out after step ii) and prior to step iii), said step B) comprising vitrifying said non-vitrified silica layers deposited in step ii) on at least part of said inner surface of said substrate tube.

5. Method according to claim 3 or 4, wherein said at least part of said inner surface of said substrate tube is the part between a longitudinal position 200 mm upstream of a reversal point near the discharge side and a longitudinal position 200 mm downstream of a reversal point near the supply side.

6. Method according to claim 3 or 4, wherein said at least part of said inner surface of said substrate tube is the part between a longitudinal position 100 mm upstream of a reversal point near the discharge side and a longitudinal position 100 mm downstream of a reversal point near the supply side.

7. Method according to claim 3 or 4, wherein said at least part of said inner surface of said substrate tube is the part between a longitudinal position 50 mm upstream of a reversal point near the discharge side and a longitudinal position 50 mm downstream of a reversal point near the supply side.

8. The method according to any one of the preceding claims, wherein the first reaction conditions comprise a pressure of higher than 30 millibar, preferably higher than 60 mbar.

9. The method according to any one of the preceding claims, wherein the first reaction conditions comprise a pressure of lower than 1000 millibar, preferably lower than 200 millibar.

10. The method according to any one of the preceding claims, wherein the second reaction conditions comprise a pressure of between 1 and 25 millibar, preferably between 10 and 15 millibar.

11. The method according to any one of the preceding claims wherein in step ii) between 1 and 200 non-vitrified silica layers are deposited.

12. The method according to any one of the preceding claims wherein the non-vitrified silica layers each, independently, have a thickness between 1 and 5 micrometer, preferably between 2 and 3 micrometer.

13. The method according to any one of the preceding claims wherein the non-vitrified silica layers that are deposited in total have a thickness between 1 and 400 micrometer.

14. The method according to any one of the preceding claims wherein the electromagnetic radiation used are microwaves.

15. Precursor for a primary preform for optical fibres provided with deposited non-vitrified and vitrified silica layers on its inner surface to be used for the manufacturing of a primary preform for optical fibres, wherein the deposited non-vitrified silica layers are present on at least part of the inner surface of said substrate tube at or near the discharge side.

## Patentansprüche

1. Verfahren zur Herstellung eines Vorläufers für eine primäre Vorform für Lichtwellenleiter mittels eines internen Plasmaabscheidungsprozesses, mit den folgenden Schritten:
i) Bereitstellen einer hohlen Substratröhre mit einer Zuführseite und einer Auslassseite;
ii) Schaffen einer ersten Plasma-Reaktionszone mit ersten Reaktionsbedingungen im Inneren der hohlen Substratröhre mittels elektromagnetischer Strahlung, um das Abscheiden von nicht glasigen Siliciumdioxidschichten auf wenigstens einem Teil der inneren Oberfläche der Substratröhre an einem Umkehrpunkt oder nahe eines Umkehrpunkts an der Auslassseite zu bewirken, um eine Substratröhre mit nicht glasigen Schichten auf wenigstens einem Teil der inneren Oberfläche bereitzustellen; und anschließend;
iii) Schaffen einer zweiten Plasmareaktionszone mit zweiten Reaktionsbedingungen im Inneren der hohlen Substratröhre mittels elektromagnetischer Strahlung, um das Abscheiden von glasigen Siliciumdioxidschichten auf der Substratröhre mit in Schritt ii) erhaltenen nicht glasigen Schichten auf wenigstens einem Teil ihrer inneren Oberfläche zu bewirken, um eine Substratröhre mit abgeschiedenen nicht glasigen und glasigen Siliciumdioxidschichten zu erhalten;
iv) Kühlen der Substratröhre mit abgeschieden, in Schritt iii) erhaltenen nicht glasigen und glasigen Siliciumdioxidschichten, um den Vorläufer für eine primäre Vorform zu erhalten.

2. Verfahren nach Anspruch 1, wobei das Verfahren einen zusätzlichen Schritt v. umfasst, bei dem der in Schritt iv. erhaltene Vorläufer für eine primäre Vorform einer Kollabierbehandlung unterzogen wird, um eine primäre Vorform zu bilden.

3. Verfahren nach Anspruch 1 oder 2, weiter umfassend einen Schritt A), der nach Schritt ii) und vor Schritt iii) ausgeführt wird, wobei Schritt A) das Wegätzen der nicht glasigen Siliciumdioxidschichten umfasst, die in Schritt ii) auf wenigstens einem Teil der inneren Oberfläche der Substratröhre abgeschieden wurden.

4. Verfahren nach Anspruch 1 oder 2, weiter umfassend einen Schritt B), der nach Schritt ii) und vor Schritt iii) ausgeführt wird, wobei Schritt B) das Verglasen der nicht glasigen Siliciumdioxidschichten umfasst, die in Schritt ii) auf wenigstens einem Teil der inneren Oberfläche der Substratröhre abgeschieden wurden.

5. Verfahren nach Anspruch 3 oder 4, wobei der wenigstens eine Teil der inneren Oberfläche der Substratröhre der Teil zwischen einer Längsposition 200 mm stromaufwärts eines Umkehrpunkts nahe der Auslassseite und einer Längsposition 200 mm stromabwärts eines Umkehrpunkts nahe der Zuführseite ist.

6. Verfahren nach Anspruch 3 oder 4, wobei der wenigstens eine Teil der inneren Oberfläche der Substratröhre der Teil zwischen einer Längsposition 100 mm stromaufwärts eines Umkehrpunkts nahe der Auslassseite und einer Längsposition 100 mm stromabwärts eines Umkehrpunkts nahe der Zuführseite ist.

7. Verfahren nach Anspruch 3 oder 4, wobei der wenigstens eine Teil der inneren Oberfläche der Substratröhre der Teil zwischen einer Längsposition 50 mm stromaufwärts eines Umkehrpunkts nahe der Auslassseite und einer Längsposition 50 mm stromabwärts eines Umkehrpunkts nahe der Zuführseite ist.

8. Verfahren nach einem der vorhergehenden Ansprüche, wobei die ersten Reaktionsbedingungen einen Druck über 30 Millibar, vorzugsweise über 60 Millibar, umfassen.

9. Verfahren nach einem der vorhergehenden Ansprüche, wobei die ersten Reaktionsbedingungen einen Druck unter 1000 Millibar, vorzugsweise unter 200 Millibar, umfassen.

10. Verfahren nach einem der vorhergehenden Ansprüche, wobei die zweiten Reaktionsbedingungen einen Druck zwischen 1 und 25 Millibar, vorzugsweise zwischen 10 und 15 Millibar, umfassen.

11. Verfahren nach einem der vorhergehenden Ansprüche, wobei in Schritt ii) zwischen 1 und 200 nicht glasige Siliciumdioxidschichten abgeschieden werden.

12. Verfahren nach einem der vorhergehenden Ansprüche, wobei die nicht glasigen Siliciumdioxidschichten jeweils für sich genommen eine Dicke zwischen 1 und 5 Mikrometer, vorzugsweise zwischen 2 und 3 Mikrometer, aufweisen.

13. Verfahren nach einem der vorhergehenden Ansprüche, wobei die nicht glasigen Siliciumdioxidschichten, die abgeschieden worden sind, insgesamt eine Dicke zwischen 1 und 400 Mikrometer aufweisen.

14. Verfahren nach einem der vorhergehenden Ansprüche, wobei die verwendete elektromagnetische Strahlung Mikrowellen sind.

15. Vorläufer für eine primäre Vorform für Lichtwellenleiter, der abgeschiedene, nicht glasige und glasige Siliciumdioxidschichten auf seiner inneren Oberfläche umfasst und zur Herstellung einer primären Vorform für Lichtwellenleiter verwendet wird, wobei die abgeschiedenen, nicht glasigen Siliciumdioxidschichten auf wenigstens einem Teil der inneren Oberfläche der Substratröhre an oder nahe der Auslassseite vorliegen.

## Revendications

1. Procédé de fabrication d'un précurseur pour une préforme primaire pour fibres optiques au moyen d'un procédé de dépôt interne par plasma, lequel procédé comprend les étapes suivantes :
i) à fournir un tube substrat creux ayant un côté alimentation et un côté évacuation ;
ii) à créer une première zone de réaction à plasma ayant des premières conditions de réaction à l'intérieur dudit tube substrat creux au moyen d'un rayonnement électromagnétique pour effectuer le dépôt de couches de silice non vitrifiées sur au moins une partie de la surface intérieure dudit tube substrat à ou à proximité d'un point d'inversion du côté évacuation pour fournir un tube substrat ayant des couches non-vitrifiées sur au moins une partie de sa surface intérieure; et ensuite ;
iii) à créer une deuxième zone de réaction à plasma ayant des deuxièmes conditions de réaction à l'intérieur dudit tube substrat creux au moyen d'un rayonnement électromagnétique pour effectuer le dépôt de couches de silice vitrifiées sur ledit tube substrat ayant des couches non vitrifiées sur au moins une partie de sa surface intérieure obtenu à l'étape ii) pour obtenir un tube substrat sur lequel sont déposées des couches de silice non vitrifiées et vitrifiées ;
iv) à refroidir le tube substrat sur lequel sont déposées des couches de silice non vitrifiées et vitrifiées obtenu à l'étape iii) pour obtenir ledit précurseur pour une préforme primaire.

2. Procédé selon la revendication 1, dans lequel le procédé comprend en outre le fait de soumettre le précurseur pour une préforme primaire obtenu à l'étape iv) à une étape supplémentaire v), qui est un traitement d'affaissement de manière à former une préforme primaire.

3. Procédé selon la revendication 1 ou 2, comprenant en outre une étape A) réalisée après l'étape ii) et avant l'étape iii), ladite étape A) comprenant le fait d'éliminer par gravure lesdites couches de silice non vitrifiées déposées à l'étape ii) sur au moins une partie de ladite surface intérieure dudit tube substrat.

4. Procédé selon la revendication 1 ou 2, comprenant en outre une étape B) réalisée après l'étape ii) et avant l'étape iii), ladite étape B) comprenant le fait de vitrifier lesdites couches de silice non vitrifiées déposées à l'étape ii) sur au moins une partie de ladite surface intérieure dudit tube substrat.

5. Procédé selon la revendication 3 ou 4, dans lequel ladite au moins une partie de ladite surface intérieure dudit tube substrat est la partie située entre une position longitudinale à 200 mm en amont d'un point d'inversion à proximité du côté évacuation et une position longitudinale à 200 mm en aval d'un point d'inversion à proximité du côté alimentation.

6. Procédé selon la revendication 3 ou 4, dans lequel ladite au moins une partie de ladite surface intérieure dudit tube substrat est la partie située entre une position longitudinale à 100 mm en amont d'un point d'inversion à proximité du côté évacuation et une position longitudinale à 100 mm en aval d'un point d'inversion à proximité du côté alimentation.

7. Procédé selon la revendication 3 ou 4, dans lequel ladite au moins une partie de ladite surface intérieure dudit tube substrat est la partie située entre une position longitudinale à 50 mm en amont d'un point d'inversion à proximité du côté évacuation et une position longitudinale à 50 mm en aval d'un point d'inversion à proximité du côté alimentation.

8. Procédé selon l'une quelconque des revendications précédentes, dans lequel les premières conditions de réaction comprennent une pression supérieure à 30 millibars, de préférence supérieure à 60 millibars.

9. Procédé selon l'une quelconque des revendications précédentes, dans lequel les premières conditions de réaction comprennent une pression inférieure à 1000 millibars, de préférence inférieure à 200 millibars.

10. Procédé selon l'une quelconque des revendications précédentes, dans lequel les deuxièmes conditions de réaction comprennent une pression comprise entre 1 et 25 millibars, de préférence entre 10 et 15 millibars.

11. Procédé selon l'une quelconque des revendications précédentes, dans lequel, à l'étape ii), entre 1 et 200 couches de silice non vitrifiées sont déposées.

12. Procédé selon l'une quelconque des revendications précédentes, dans lequel les couches de silice non vitrifiées présentent chacune, indépendamment, une épaisseur comprise entre 1 et 5 micromètres, de préférence entre 2 et 3 micromètres.

13. Procédé selon l'une quelconque des revendications précédentes, dans lequel les couches de silice non vitrifiées qui sont déposées au total présentent une épaisseur comprise entre 1 et 400 micromètres.

14. Procédé selon l'une quelconque des revendications précédentes, dans lequel les rayonnements électromagnétiques utilisés sont des micro-ondes.

15. Précurseur pour une préforme primaire pour fibres optiques muni de couches de silice non vitrifiées et vitrifiées déposées sur sa surface intérieure à utiliser pour la fabrication d'une préforme primaire pour fibres optiques, dans lequel les couches de silice non vitrifiées déposées sont présentes sur au moins une partie de la surface intérieure dudit tube substrat à ou à proximité du côté évacuation.
